Europäisches Patentamt

European Patent Office

Office européen des brevets

(11) Veröffentlichungsnummer: **0 003 955**
A1

## (12) EUROPÄISCHE PATENTANMELDUNG

(21) Anmeldenummer: 78101832.0

(22) Anmeldetag: 23.12.78

(51) Int. Cl.²: **B 65 G 53/14**
**B 65 G 53/42**

(30) Priorität: 08.03.78 DE 2809926

(43) Veröffentlichungstag der Anmeldung:
19.09.79 Patentblatt 79/19

(84) Benannte Vertragsstaaten:
BE FR GB

(71) Anmelder: Polysius AG
Graf-Galen-Strasse 17
D-4720 Beckum(DE)

(72) Erfinder: Heinemann, Otto
Galileistrasse 8
D-4722 Ennigerloh(DE)

(74) Vertreter: Tetzner, Volkmar, Dr.-Ing. Dr. jur. et al,
Van-Gogh-Strasse 3
D-8000 München 71(DE)

(54) Förderluftdüse sowie pneumatischer Feingutförderer.

(57) Die Erfindung betrifft eine Förderluftdüse sowie einen mit einer solchen Förderluftdüse versehenen pneumatischen Feingutförderer. Die Förderluftdüse enthält eine zentrale größere Luftaustrittszone (3), um die herum mehrere kleinere Luftaustrittszonen (4) peripher angeordnet sind. Durch eine solche Gestaltung der Förderluftdüse wird die Leistungsaufnahme eines mit einer solchen Förderluftdüse ausgerüsteten pneumatischen Feingutförderer merklich herabgesetzt.

FIG.2

EP 0 003 955 A1

Croydon Printing Company Ltd.

QN5 3955
München
2 ' DEZ. 1978

Polysius AG, Beckum
=====================

Förderluftdüse sowie pneumatischer Feingutförderer

Die Erfindung betrifft eine Förderluftdüse für
einen pneumatischen Feingutförderer, mit mehreren
über den Düsenquerschnitt verteilten Luftaustrittszonen. Ferner befaßt sich die Erfindung mit einem
pneumatischen Feingutförderer.

Eine Förderluftdüse der genannten Art wird bei einem
pneumatischen Feingutförderer im allgemeinen so eingebaut, daß sie unterhalb der offenen Mündung eines Gutförderrohres angeordnet und dazu zentriert wird, wobei
die Anordnung in der Weise erfolgt, daß zu förderndes
Feingut der Mündung der Gutförderleitung in weitgehend
aufgelockertem Zustand zuläuft (beispielsweise in einem
entsprechend ausgebildeten Behälter). Die Förderluftdüse selbst ist an eine von einem Gebläse oder dergleichen kommende Förderluftleitung angeschlossen.

Es sind bereits verschiedene Förderluftdüsen bekannt, bei denen der Düsenquerschnitt an dem Luftaustrittsende entweder eine einstrahlige, verhältnismäßig
große Düsenöffnung aufweist oder in eine Anzahl Luftaustrittszonen unterteilt ist.

0003955

Pneumatische Feingutförderer lassen sich im Verhältnis zu mechanischen Gutförderern im allgemeinen verhältnismäßig einfach und raumsparend einsetzen, haben
jedoch meist eine relativ hohe Leistungsaufnahme.

Der Erfindung liegt daher die Aufgabe zugrunde, eine
Förderluftdüse der eingangs genannten Art in der Weise
zu verbessern, daß insbesondere die Leistungsaufnahme
des zugehörigen pneumatischen Feingutförderers im
Gegensatz zu bekannten Ausführungen merklich herabgesetzt werden kann.

Diese Aufgabe wird erfindungsgemäß dadurch gelöst,
daß um eine zentrale größere Luftaustrittszone mehrere
kleinere Luftaustrittszonen peripher angeordnet sind.

Bei den der Erfindung zugrundeliegenden Versuchen hat
sich gezeigt, daß durch die erfindungsgemäße Ausbildung
des Düsenquerschnittes besonders günstige Luftströmungsverhältnisse geschaffen werden, indem um einen verhältnismäßig dicken zentralen Förderluftstrahl periphere dünnere
Förderluftstrahlen ausgebildet werden, die zu einem besonders günstigen Energiebedarf für die Feingutförderung
führen; bei den Versuchen wurden bei etwa gleichen Förderleistungen um etwa 12% kleinere Leistungsaufnahmen
gemessen als bei bekannten Düsenausführungen.

Eine baulich besonders günstige Ausführungsform der
Erfindung besteht in einem kreisförmigen Düsenquerschnitt,
wobei die zentrale Luftaustrittszone durch eine zentrale
Düsenbohrung gebildet ist, um die herum eine Anzahl kleinerer Düsenbohrungen als periphere kleinere Luftaustrittszonen
in Ringform gleichmäßig verteilt ist.

Eine andere Ausführungsform der erfindungsgemäßen
Förderluftdüse besteht darin, daß die zentrale Luftaustrittszone durch eine etwa kreisförmige Düsenöffnung gebildet ist, an deren Umfang sich radial nach außen gerichtete, mit dieser zentralen Düsenöffnung in offener
Verbindung stehende, ringförmige äußere Düsenöffnungen
als periphere kleinere Luftaustrittszonen anschließen.
Wenn dabei weiterhin die äußeren Düsenöffnungen gleich
große Luftdurchtrittsflächen besitzen und gleichmäßig
über den Umfang der zentralen Düsenöffnung verteilt
sind, dann erhält der Düsenquerschnitt am Luftaustrittsende eine etwa sternförmige Form.

Ein pneumatischer Feingutförderer, der einen Förderbehälter, ein in den Förderbehälter hineinragendes, im
Bereich des Behälterbodens ausmündendes Gutförderrohr
sowie eine auf die Mündung des Gutförderrohres ausgerichtete Luftförderdüse enthält, ist erfindungsgemäß
besonders vorteilhaft ausgebildet, wenn die Förderluftdüse in der zuvor erwähnten Weise mit einer zentralen
größeren Luftaustrittszone und mehreren peripher dazu
angeordneten kleineren Luftaustrittszonen ausgebildet ist.

Weitere zweckmäßige Ausgestaltungen der Erfindung ergeben sich aus den übrigen Unteransprüchen sowie aus
der folgenden Beschreibung einiger in der Zeichnung veranschaulichter Ausführungsbeispiele. Es zeigen

Fig.1    eine zum Teil geschnittene Ansicht der erfindungsgemäßen Förderluftdüse;

Fig.2    eine Aufsicht (Pfeil II) auf die in Fig.1 dargestellte Förderluftdüse;

Fig.3    eine ähnliche Aufsicht wie Fig.2, jedoch mit
         einer abgewandelten Ausführungsform der Luftaustrittszonen;

Fig.4    eine zum Teil geschnittene Schema-Ansicht eines
         zu einem pneumatischen Feingutförderer gehörenden Förderbehälters.

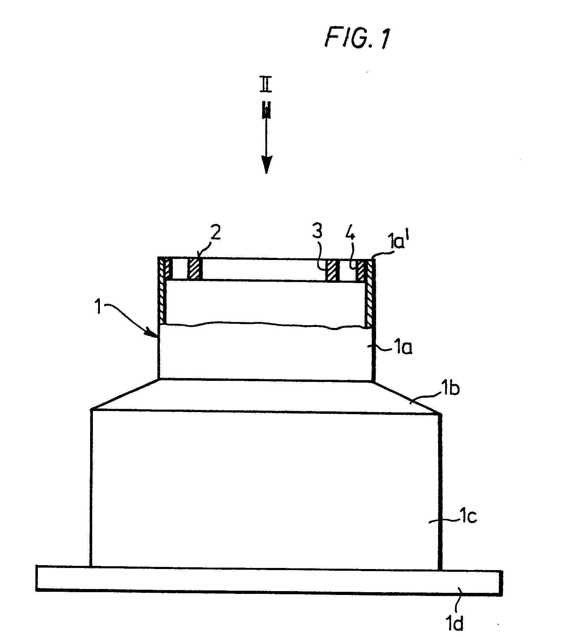

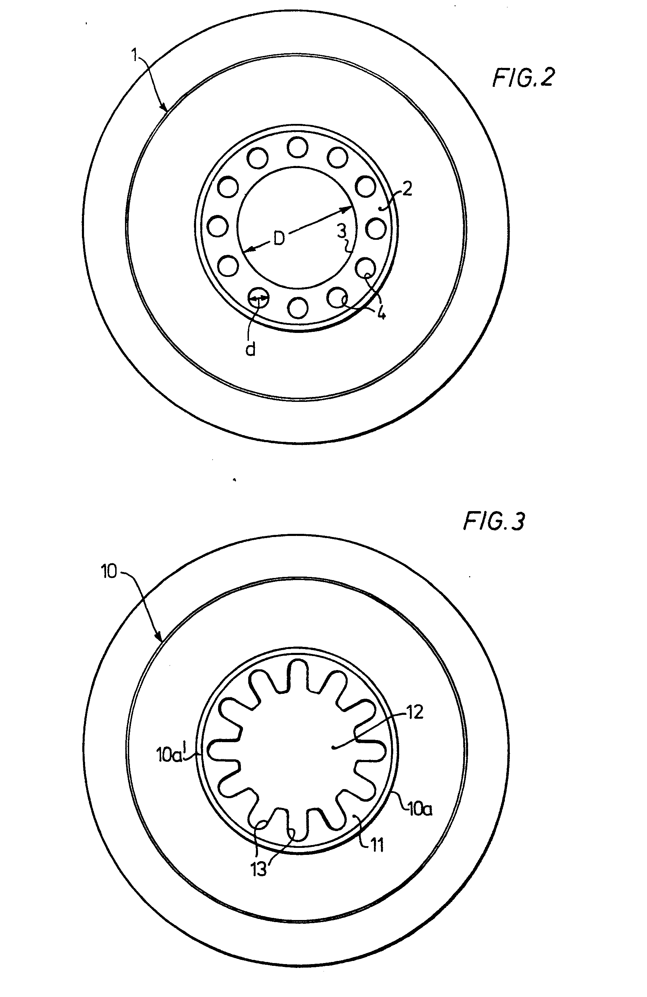

Anhand der Fig.1 und 2 sei zunächst eine erste Ausführungsform einer erfindungsgemäßen Förderluftdüse veranschaulicht, die für den Einbau in einen pneumatischen
Feingutförderer bestimmt ist.

Die Förderluftdüse 1 weist in der Darstellung der
Fig.1 im wesentlichen drei Längsabschnitte auf, nämlich
das etwa zylindrische Luftaustrittsende 1a, einen sich
unten an das Luftaustrittsende 1a anschließenden, konisch
erweiterten Teil 1b und einen sich an den konischen
Teil 1b unten anschließenden Teil 1c, der einen größeren
Durchmesser als das Luftaustrittsende 1a aufweist und
mit seinem unteren Ende beispielsweise mit Hilfe eines
Flansches 1d an eine hier nicht dargestellte Luftleitung
angeschlossen ist, über die Förderluft von einer geeigneten
Quelle herangeführt wird. Die im wesentlichen rohrartig ausgeführte Förderluftdüse 1 besitzt einen kreisförmigen
Düsenquerschnitt.

Am freien Ende 1a' des Luftaustrittsendes 1a ist
in die Förderluftdüse 1 eine ringförmige Lochplatte 2
eingesetzt, die bündig mit dem freien Ende 1a' abschließt. Durch diese Anordnung der Lochplatte 2 erhält
der Düsenquerschnitt eine Anzahl von Luftaustrittszonen, und zwar eine zentrale größere Luftaustrittszone 3 sowie mehrere peripher dazu angeordnete kleinere
Luftaustrittszonen 4. Da die Lochplatte 2 - wie erwähnt -
ringförmig ausgebildet ist, ist die zentrale Luftaustrittszone durch eine zentrale Düsenbohrung 3 gebildet.
Um diese zentrale Düsenbohrung herum sind viele kleinere
Düsenbohrungen 4 als periphere kleinere Luftaustrittszonen mit gleichmäßigen Umfangsabständen in der ringförmigen Lochplatte 2 verteilt. Alle kleineren Düsenbohrungen 4 liegen auf einem gemeinsamen Teilkreis,
der konzentrisch zur großen zentralen Düsenbohrung 3
angeordnet ist; im Beispiel der Fig.5 sind zwölf kleinere
Düsenbohrungen in einer einzigen ringförmigen Lochreihe
der Lochplatte 2 vorgesehen.

Was die Größe der peripheren kleineren Düsenbohrungen
4 gegenüber der größeren zentralen Düsenbohrung 3 anbelangt, so soll das Flächenverhältnis zwischen der freien
Luftdurchtrittsfläche der zentralen Düsenbohrung 3 und
der gesamten freien Luftdurchtrittsfläche der peripheren
Düsenbohrungen 4 zwischen etwa 1 : 1 und 3 : 1, vorzugsweise zwischen etwa 1,3 : 1 und 2,2 : 1, liegen.

Nimmt man beispielsweise bei der Ausführungsform gemäß Fig.2 an, daß der Durchmesser D der zentralen Düsenbohrung 3 150 mm und der Durchmesser d der zwölf peripheren kleineren Düsenbohrungen 4 32 mm beträgt, dann ist die freie Luftdurchtrittsfläche der zentralen Düsenbohrung 3 etwa 17 663 mm² und die gesamte freie Luftdurchtrittsfläche der zwölf kleineren Düsenbohrungen 4 etwa 9646 mm² groß, so daß sich ein Flächenverhältnis von etwa 1,83 : 1 ergibt.

Bei der in Fig.3 lediglich in der Aufsicht veranschaulichten zweiten Ausführungsform der erfindungsgemäßen Förderluftdüse 10 kann der Düsenkörper bis auf die Lochplatte 2 in gleicher Form ausgebildet sein wie anhand der Fig.1 erläutert worden ist.

In das freie Ende 10a' des Luftaustrittsendes 10a dieser Förderluftdüse 10 ist eine Düsenöffnungsplatte 11 eingesetzt, die insgesamt zwar ebenfalls etwa ringförmig ausgebildet ist und eine etwa kreisförmige zentrale Düsenöffnung 12 als zentrale Luftaustrittszone aufweist. An den Umfang dieser zentralen Düsenöffnung 12 schließen sich jedoch radial nach außen gerichtete, rinnenförmige äußere Düsenöffnungen 13 an, die in diesem Falle die peripheren kleineren Luftaustrittszonen bilden und mit der zentralen Düsenöffnung 12 in offener Verbindung stehen. Die äußeren kleineren Düsenöffnungen 13 besitzen alle eine gleich große Luftdurchtrittsfläche, und sie sind gleichmäßig über den Umfang der zentralen Düsenöffnung 12 verteilt, so daß sich - wie Fig.3 deutlich erkennen läßt - ein Düsenquerschnitt
mit einer insgesamt sternförmigen Luftdurchtrittsfläche
ergibt.

Das Flächenverhältnis zwischen der Luftdurchtrittsfläche der zentralen Düsenöffnung 12 und der gesamten
Luftdurchtrittsfläche der äußeren kleineren Düsenöffnungen 13 kann wieder in der weiter oben anhand Fig.2
geschilderten Weise gewählt werden.

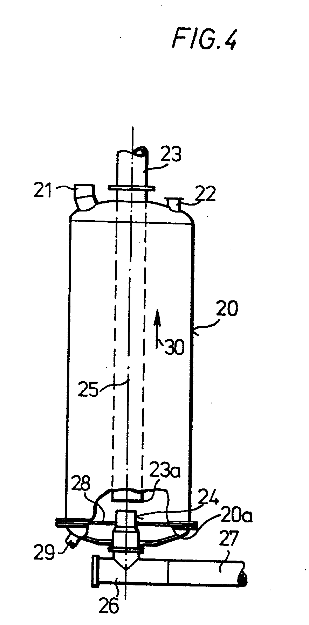

Anhand der Fig.4 sei nun ein bevorzugtes Ausführungsbeispiel eines pneumatischen Feingutförderers 20 erläutert, bei dem die anhand der Fig.1 bis 3 beschriebene
erfindungsgemäße Förderluftdüse Verwendung finden kann.

In Fig.4 sind der Einfachheit halber lediglich die
zur Erläuterung dieser Erfindung wesentlichen Teile
des pneumatischen Feingutförderers veranschaulicht.
Dieser Feingutförderer (beispielsweise ein Senkrechtförderer) enthält einen Förderbehälter 20, der in beliebiger Weise aufgestellt werden kann und in üblicher
Weise einen Guteinlaufstutzen 21 und einen Entlüftungsstutzen 22 besitzt. In diesen Förderbehälter 20 ist
von oben her zentral ein als Steigrohr 23 ausgebildetes Gutförderrohr eingeführt, dessen unteres Ende 23a
etwa im Bereich des Behälterbodens 20a ausmündet. Mit
geringem Abstand unter der Mündung des unteren Steigrohrendes 23a ist eine Förderluftdüse 24 vorgesehen,
die zu der Mündung dieses unteren Steigrohrendes 23a
ausgerichtet ist; das Steigrohr 23 und die Förderluftdüse 24 sind vorzugsweise auf dieselbe senkrechte
Achse 25 zentriert, die auch die senkrechte Mittelachse
des Förderbehälters 20 bildet.

0003955

Die Förderluftdüse 24 ist in üblicher Weise an eine Leitung 26 angeschlossen, über die Förderluft von einer geeigneten Quelle (z.B. Gebläse) in Richtung des Pfeiles 27 herangeführt wird.

Um das zu fördernde Feingut in gleichmäßig aufgelockertem Zustand in den Bereich zwischen Düse 24 und der Mündung des unteren Steigrohrendes 23a zuführen zu können, ist der Boden 20a des Förderbehälters 20 doppelt ausgeführt und zum Innenraum des Förderbehälters 20 mit einer porösen, luftdurchlässigen Platte 28 versehen, wobei durch einen Stutzen 29 Auflockerungsluft in den Hohlraum des Bodens 20a und durch die Platte 28 geleitet werden kann. Feingut kann dann in Richtung des Pfeiles 30 durch das Steigrohr 23 aus dem Förderbehälter 20 abgeführt und irgendeinem Verbraucher zugefördert werden.

E P A
0003955
2 7 DEZ. 1978

- 1 -

## Patentansprüche

1. Förderluftdüse für einen pneumatischen Feingutförderer, mit mehreren über den Düsenquerschnitt verteilten Luftaustrittszonen, dadurch g e k e n n z e i c h n e t , daß um eine zentrale größereLuftaustrittszone (3; 12) mehrere kleinere Luftaustrittszonen (4; 13) peripher angeordnet sind.

2. Förderluftdüse nach Anspruch 1, dadurch gekennzeichnet, daß ein runder Düsenquerschnitt vorgesehen ist und die kleineren Luftaustrittszonen (4; 13) ringförmig um die zentrale Luftaustrittszone (3; 12) angeordnet sind.

3. Förderluftdüse nach Anspruch 2, gekennzeichnet durch einen kreisförmigen Düsenquerschnitt.

4. Förderluftdüse nach einem der vorhergehenden Ansprüche, dadurch gekennzeichnet, daß die zentrale Luftaustrittszone durch eine zentrale Düsenbohrung (3) gebildet ist, um die herum eine Anzahl kleinerer Düsenbohrungen (4) als periphere kleinere Luftaustrittszonen in Ringform gleichmäßig verteilt ist.

5. Förderluftdüse nach Anspruch 4, dadurch gekennzeichnet, daß nur eine ringförmige Lochreihe kleinerer Düsenbohrungen (4) vorgesehen ist.

6. Förderluftdüse nach den Ansprüchen 1 bis 3, dadurch
gekennzeichnet, daß die zentrale Luftaustrittszone
durch eine etwa kreisförmige Düsenöffnung (12) gebildet ist, an deren Umfang sich radial nach außen
gerichtete, mit dieser zentralen Düsenöffnung in
offener Verbindung stehende, rinnenförmige äußere
Düsenöffnungen (13) als periphere kleinere Luftaustrittszonen anschließen.

7. Förderluftdüse nach Anspruch 6, dadurch gekennzeichnet, daß die äußeren Düsenöffnungen (13) gleich große
Luftdurchtrittsflächen besitzen und gleichmäßig
über den Umfang der zentralen Düsenöffnung (12) verteilt sind.

8. Förderluftdüse nach wenigstens einem der vorhergehenden Ansprüche, dadurch gekennzeichnet, daß das
Flächenverhältnis zwischen der Luftdurchtrittsfläche
der zentralen Luftaustrittszone (3; 12) und der gesamten Luftdurchtrittsfläche aller peripheren
kleineren Luftaustrittszonen (4; 13) zwischen etwa
1 : 1 und 3 : 1, vorzugsweise zwischen etwa 1,3 : 1
und 2,2 : 1, liegt.

9. Pneumatischer Feingutförderer mit einem Förderbehälter, einem in den Förderbehälter hineinragenden, im Bereich des Behälterbodens ausmündenden
Gutförderrohr sowie einer auf die Mündung des Gutförderrohres ausgerichteten Förderluftdüse, dadurch gekennzeichnet, daß die Förderluftdüse (24)
nach wenigstens einem der Ansprüche 1 bis 8 ausgebildet ist.

0003955

2 ⁻ DEZ. 1978

*FIG.1*

0003955

FIG.2

FIG.3

0003955
München
2 7. DEZ. 1978

FIG.4

Europäisches
Patentamt

**EUROPÄISCHER RECHERCHENBERICHT**

0003955
Nummer der Anmeldung

EP 78 10 1832

| Kategorie | Kennzeichnung des Dokuments mit Angabe, soweit erforderlich, der maßgeblichen Teile | betrifft Anspruch |
|---|---|---|
| | US - A - 3 186 769 (HOWLETT) <br> * Das ganze Dokument * | 1,3 |
| | -- | |
| | DE - C - 30 539 (NEWTON) <br> * Das ganze Dokument * | 1 |
| | -- | |
| | FR - A - 1 227 415 (LAZARETH) <br> * Das ganze Dokument * | 1,3,4 |
| | -- | |
| | GB - A - 946 395 (GRAVES) <br> * Seite 2, Zeilen 85-130; Seite 2, Zeilen 1-59; Abbildung 4 * | 1-4 |
| | -- | |
| | US - A - 2 272 564 (KUENER) <br> * Das ganze Dokument * | 1 |
| | ---- | |

**KLASSIFIKATION DER ANMELDUNG (Int.Cl.²)**

B 65 G 53/14
        53/42

**RECHERCHIERTE SACHGEBIETE (Int. Cl.²)**

B 65 G

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-06-1979 | OSTIJN |

EPA form 1503.1   06.78